(19) Europäisches Patentamt
European Patent Office
Office européen des brevets

(11) **EP 3 428 318 B1**

(12) **FASCICULE DE BREVET EUROPEEN**

(45) Date de publication et mention
de la délivrance du brevet:
**09.11.2022  Bulletin 2022/45**

(21) Numéro de dépôt: **18182677.7**

(22) Date de dépôt: **10.07.2018**

(51) Classification Internationale des Brevets (IPC):
*C25B 1/04* (2021.01)      *C25B 1/02* (2006.01)
*C25B 9/23* (2021.01)      *C25B 11/081* (2021.01)
*C25B 15/08* (2006.01)      *B01D 53/32* (2006.01)

(52) Classification Coopérative des Brevets (CPC):
**C25B 1/02; C25B 1/04; C25B 9/23; C25B 11/081;
C25B 15/083;** B01D 2256/16; Y02E 60/36

(54) **SYSTEME ELECTROCHIMIQUE ET PROCEDE D'ELECTROLYSE DE L'EAU**

ELEKTROCHEMISCHES SYSTEM UND VERFAHREN ZUR ELEKTROLYSE VON WASSER

ELECTROCHEMICAL SYSTEM AND WATER ELECTROLYSIS METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **12.07.2017  FR 1756601**

(43) Date de publication de la demande:
**16.01.2019  Bulletin 2019/03**

(73) Titulaire: **Commissariat à l'Énergie Atomique
et aux Énergies Alternatives
75015 Paris (FR)**

(72) Inventeurs:
• **VERDIN, Baptiste
38400 SAINT MARTIN D'HERES (FR)**
• **VINCENT, Rémi
38000 GRENOBLE (FR)**

(74) Mandataire: **INNOV-GROUP
310, avenue Berthelot
69372 Lyon Cedex 08 (FR)**

(56) Documents cités:
**FR-A1- 2 927 907      JP-A- 2012 111 981
US-A1- 2003 196 893      US-A1- 2004 040 862
US-A1- 2016 024 666**

EP 3 428 318 B1

**Description**

**DOMAINE TECHNIQUE**

Le domaine de l'invention est celui de la production d'hydrogène et d'oxygène par électrolyse de l'eau, et concerne en particulier un système et un procédé électrochimique d'électrolyse de l'eau à basse température au moyen de membranes échangeuses de protons.

**ÉTAT DE LA TECHNIQUE ANTÉRIEURE**

L'électrolyse de l'eau est l'une des techniques utilisées permettant de produire de l'hydrogène et de l'oxygène, en vue par exemple d'approvisionner les piles à combustible. La mise en œuvre de ce procédé de production d'hydrogène et d'oxygène peut être effectuée à l'aide d'un électrolyseur à membrane échangeuse de protons.

Un tel électrolyseur comporte un assemblage membrane électrodes formé d'une anode et d'une cathode séparées l'une de l'autre par une membrane échangeuse de protons. Lorsque de l'eau est amenée au contact de l'anode et lorsqu'une différence de potentiel est appliquée aux électrodes, l'anode réalise l'oxydation de l'eau qui produit de l'oxygène et des protons. Ces derniers migrent au travers de la membrane électrolytique jusqu'à la cathode. La réduction des protons à la cathode est alors réalisée, produisant ainsi de l'hydrogène.

Cependant, le coefficient de diffusion de la membrane électrolytique vis-à-vis de l'hydrogène produit n'est pas nul, de sorte que de l'hydrogène diffuse de la cathode jusqu'à l'anode. La fraction volumique d'hydrogène dans l'oxygène, en l'absence d'eau liquide, doit généralement rester inférieure à 4% pour limiter les risques d'ignition.

Une solution pour limiter la perméation de la cathode jusqu'à l'anode de l'hydrogène produit consiste à augmenter l'épaisseur de la membrane électrolytique. Cependant, cela se traduit par une augmentation de la résistance protonique et donc par une dégradation des performances électrochimiques de l'électrolyseur.

Il existe un besoin de disposer d'un système électrochimique permettant de produire de l'hydrogène et de l'oxygène par électrolyse de l'eau avec une proportion d'hydrogène dans l'oxygène produit suffisamment faible pour écarter les risques d'ignition et qui soit susceptible de présenter des performances électrochimiques améliorées.

Le document US2004/040862 porte sur la génération d'hydrogène à haute pression. Un système électrochimique est formé d'un électrolyseur et d'un compresseur. L'hydrogène généré à la cathode de l'électrolyseur est conduit jusqu'à l'anode du compresseur pour y être oxydé. En sortie de la cathode du compresseur, l'hydrogène présente une pression P2 supérieure à la pression P1 initiale. Cependant, ce document ne décrit pas la problématique de limiter la proportion d'hydrogène dans l'oxygène produit à l'anode de l'électrolyseur.

Le document US2003/196893 décrit une cellule électrochimique dont la membrane électrolytique est de type HTLH (pour *High-Temperature Low-Hydration*, en anglais), telle qu'une membrane à ionomère non fluoré. Cependant, il n'est pas décrit dans ce document la problématique de la limitation de la proportion d'hydrogène dans l'oxygène produit à l'anode d'un électrolyseur.

Enfin, le document US2016/0024666 décrit la combinaison d'un électrolyseur et d'une pile à combustible. L'hydrogène généré à la cathode de l'électrolyseur est fourni à l'anode de la pile à combustible où il est réduit. L'oxygène produit à l'anode de l'électrolyseur est transmis à la cathode de la pile où il se recombine avec les protons et les électrons pour former de l'eau. La pile à combustible agit comme un compresseur électrochimique. Cependant, ce document ne décrit pas non plus la problématique de limiter la proportion d'hydrogène dans l'oxygène produit à l'anode de l'électrolyseur.

**EXPOSÉ DE L'INVENTION**

L'invention a pour objectif de remédier au moins en partie aux inconvénients de l'art antérieur, et plus particulièrement de proposer un système électrochimique d'électrolyse de l'eau, comportant une entrée dite principale pour recevoir de l'eau à électrolyser, une première sortie pour fournir de l'hydrogène produit et une deuxième sortie pour fournir de l'oxygène produit ; et

- un dispositif d'électrolyse comportant un assemblage membrane électrodes formé d'une première anode et d'une première cathode séparées l'une de l'autre par une première membrane échangeuse de protons, la première anode étant adaptée à effectuer l'oxydation de l'eau et la première cathode étant adaptée à effectuer la réduction des protons, la première anode étant fluidiquement associée à une entrée reliée à l'entrée principale et à une sortie.

Selon l'invention, le système électrochimique comporte :

- un dispositif de séparation comportant un assemblage membrane électrodes formé d'une deuxième anode et d'une deuxième cathode séparées l'une de l'autre par une deuxième membrane échangeuse de protons, la deuxième anode étant adaptée à effectuer l'oxydation de l'hydrogène et la deuxième cathode étant adaptée à effectuer la réduction des protons, la deuxième cathode étant fluidiquement associée à une sortie reliée à la première sortie du système électrochimique ; la deuxième anode étant fluidiquement associée à une entrée reliée à la sortie de la première anode, et à une sortie reliée à la deuxième sortie du système électrochimique.

Certains aspects préférés mais non limitatifs de ce procédé sont les suivants.

Le dispositif de séparation peut comporter un circuit électrique adapté à appliquer une différence de potentiel entre la deuxième anode et la deuxième cathode.

Le système électrochimique peut comporter un séparateur de phase à la deuxième sortie.

Le système électrochimique peut comporter une ligne fluidique de transfert anodique reliant la sortie de la première anode à l'entrée de la deuxième anode sans comporter de séparateur de phase.

La première anode peut comporter un catalyseur favorisant l'oxydation de l'eau, le catalyseur étant choisi parmi l'iridium et le ruthénium.

La deuxième anode peut comporter un catalyseur favorisant l'oxydation de l'hydrogène, le catalyseur étant choisi parmi le platine et le palladium.

La première cathode et la deuxième cathode peuvent comporter chacune un catalyseur favorisant la réduction des protons, le catalyseur étant choisi parmi le platine et le palladium.

Le système électrochimique peut comporter une entrée dite secondaire adaptée à recevoir de l'eau, l'entrée secondaire étant reliée à une entrée de la première cathode.

Le système électrochimique peut comporter une ligne fluidique d'évacuation reliant la sortie de la deuxième cathode à la première sortie du système électrochimique, la ligne d'évacuation comportant un organe de régulation de la pression autorisant l'écoulement fluidique lorsqu'une pression du fluide présent dans la ligne d'évacuation est égale à une valeur de consigne.

La première membrane et la deuxième membrane peuvent être distinctes l'une de l'autre.

La deuxième membrane peut présenter une épaisseur supérieure à celle de la première membrane.

La première membrane et la deuxième membrane sont de préférence des membranes échangeuses de protons à polymère fluoré telles que des membranes en Nafion.

L'invention porte également sur un procédé d'électrolyse de l'eau, comportant une introduction d'eau en sur-stœchiométrie à l'entrée principale du système électrochimique selon l'une quelconque des caractéristiques précédentes.

Le procédé peut comporter une introduction d'eau à une entrée dite secondaire reliée à une entrée de la première cathode.

L'eau introduite à l'entrée secondaire peut présenter une pression supérieure à une pression de l'eau introduite à l'entrée principale.

L'invention porte également sur un procédé de réalisation d'un système électrochimique selon l'une quelconque des caractéristiques précédentes, comportant une étape de calcul d'une surface active de la première membrane du dispositif de séparation de telle manière qu'une proportion d'hydrogène dans l'oxygène à la sortie de la deuxième anode présente une valeur de sortie inférieure ou égale à une valeur prédéfinie, compte tenu d'une valeur d'entrée de la proportion d'hydrogène à l'entrée de la deuxième anode et d'une valeur de tension électrique appliquée entre la deuxième anode et la deuxième cathode.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1 est une vue schématique d'un système électrochimique d'électrolyse de l'eau selon un mode de réalisation

la figure 2 est une vue schématique d'une variante du système électrochimique illustré sur la figure 1.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur un système électrochimique et un procédé d'électrolyse de l'eau permettant de produire de l'hydrogène et de l'oxygène. Le système électrochimique comporte des assemblages membrane électrodes (AME) dont les membranes sont du type membrane échangeuse de protons. La réaction électrochimique d'électrolyse de l'eau conduit à la génération d'oxygène côté anode et d'hydrogène côté cathode. Cependant, de l'hydrogène généré à la cathode peut diffuser par perméation au travers de la membrane électrolytique pour rejoindre l'anode et se mélanger à l'oxygène produit.

L'invention permet de séparer l'hydrogène de l'oxygène côté anodique, pour ainsi limiter la fraction volumique de l'hydrogène présent à l'anode, et donc limiter les risques d'ignition. L'invention permet également de diminuer la dimension de la ou des membranes électrolytiques pour augmenter les performances du système électrochimique.

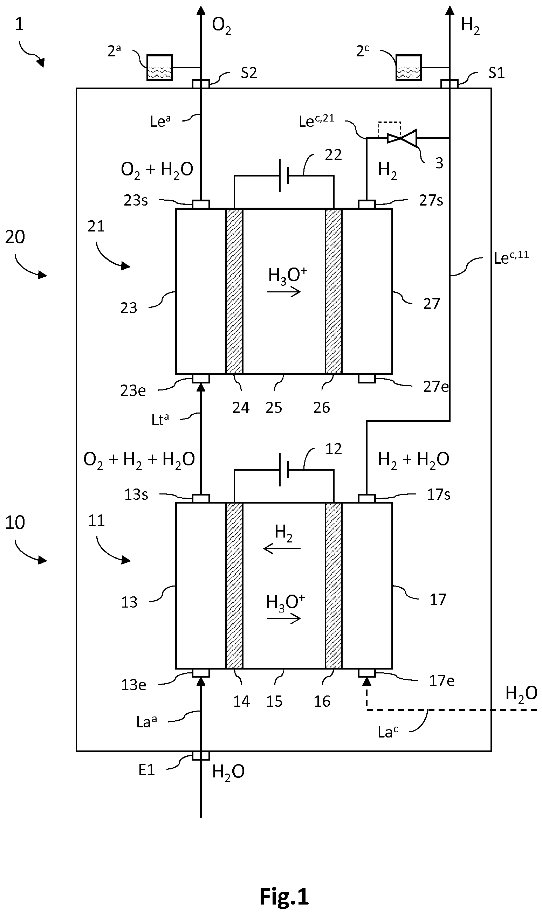

La figure 1 illustre schématiquement un système électrochimique 1 d'électrolyse de l'eau selon un mode de réalisation. Le système électrochimique 1 est adapté à recevoir en entrée E1 de l'eau à électrolyser, et à fournir de l'hydrogène à une première sortie Si dite cathodique et de l'oxygène à une deuxième sortie S2 dite anodique. Il comporte pour cela un dispositif d'électrolyse 10 et un dispositif de séparation 20. L'eau introduite en entrée E1 est en phase liquide, et l'oxygène et l'hydrogène récupérés en sortie S1, S2 sont en phase gazeuse.

Le dispositif d'électrolyse 10 est adapté à réaliser l'électrolyse de l'eau reçue à l'entrée principale E1 du système électrochimique 1. Il comporte pour cela une première cellule électrochimique 11 à membrane échangeuse de protons ainsi qu'un premier circuit électrique 12 permettant d'appliquer une différence de potentiel aux électrodes de la cellule électrochimique 11.

La première cellule électrochimique 11 comporte un assemblage membrane électrodes formé d'une première anode 14 et d'une première cathode 16 séparées l'une de l'autre par une première membrane électrolytique 15 échangeuse de protons. Elle comporte en outre des plaques électriquement conductrices qui forment, l'une un premier circuit de distribution anodique 13, et l'autre un premier circuit de distribution cathodique 17.

La première anode 14 comporte une couche active adaptée à réaliser l'oxydation de l'eau. La couche active comporte un catalyseur favorisant cette réaction d'oxydation, par exemple de l'oxyde d'iridium ou de ruthénium. La réaction d'oxydation de l'eau s'écrit :

$$H_2O \rightarrow 2H^+ + 2e^- + \frac{1}{2}O^2$$

La première cathode 16 comporte une couche active adaptée à réaliser la réduction des protons ayant diffusé au travers de la membrane électrolytique 15 avec les électrons issus de l'oxydation de l'eau. La couche active comporte un catalyseur favorisant cette réaction de réduction, par exemple du palladium ou de préférence des particules de platine supportées par du carbone. La rédaction de réduction des protons s'écrit :

$$2H^+ + 2e^- \rightarrow H_2$$

La première membrane électrolytique 15 est du type échangeuse de protons. Elle permet la diffusion de protons de l'anode 14 jusqu'à la cathode 16, les protons pouvant se présenter au sein de la membrane 15 sous la forme ions $H_3O^+$. Elle présente un coefficient non nul de perméation de l'hydrogène, ce qui autorise ainsi la diffusion de l'hydrogène au travers de la membrane 15 de la cathode 16 jusqu'à l'anode 14. La membrane électrolytique 15 peut être réalisée à partir de matériaux choisis habituellement par l'homme du métier, tels que ceux commercialisés sous la référence Nafion 115 ou Nafion 117 qui présente un coefficient de perméation à l'hydrogène de l'ordre de $1,25.10^4$ cm³/s/cm² à 80°C et à pression atmosphérique.

Le premier circuit de distribution anodique 13 assure l'écoulement de fluide à partir d'un collecteur d'entrée 13e également appelé entrée anodique ou entrée de l'anode, jusqu'à un collecteur de sortie 13s appelé sortie anodique ou sortie de l'anode. Il reçoit ainsi en entrée 13e l'eau à électrolyser par une ligne fluidique d'alimentation anodique Laᵃ et fournit en sortie 13s des fluides, à savoir de l'eau n'ayant pas réagi, de l'oxygène produit par l'oxydation de l'eau, et de l'hydrogène ayant diffusé au travers de la membrane électrolytique 15 par perméation.

Comme mentionné plus loin, la sortie anodique 13s est reliée par une ligne fluidique de transfert Ltᵃ à l'entrée anodique 23e du circuit de distribution 23 du dispositif de séparation 20. Pour éviter les risques d'ignition entre l'hydrogène et l'oxygène, il est préférable que l'eau liquide introduite à l'entrée principale E1 soit en sur-stœchiométrie, c'est-à-dire que la quantité d'eau liquide introduite à l'entrée E1 est supérieure, par exemple dix fois supérieure, à la quantité d'eau consommée à l'anode 14 du dispositif d'électrolyse 10. Ainsi, de l'eau liquide est présente dans le circuit de distribution anodique 13 et dans la ligne fluidique de transfert Ltᵃ, limitant ainsi les risques d'ignition liés à la proportion potentiellement élevée d'hydrogène dans l'oxygène.

Le premier circuit de distribution cathodique 17 assure l'écoulement de fluide à partir d'un collecteur d'entrée 17e appelé entrée cathodique, jusqu'à un collecteur de sortie 17s appelé sortie cathodique. Il reçoit de préférence en entrée 17e de l'eau par une ligne fluidique d'alimentation cathodique Laᶜ permettant d'améliorer l'humidification de la membrane électrolytique, et fournit en sortie 17s des fluides, à savoir de l'eau liquide et de l'hydrogène produit par la réduction des protons.

Le premier circuit électrique 12 permet d'appliquer une différence de potentiel électrique continue V1 entre l'anode 14 et la cathode 16, assurant ainsi l'oxydation de l'eau à l'anode 14, la circulation des électrons générés à l'anode 14 dans le circuit électrique 12 jusqu'à la cathode 16, et la réduction des protons à la cathode 16. La tension électrique appliquée V1 est positive, dans le sens où le potentiel électrique imposé à l'anode 14 est supérieur à celui imposé à la cathode 16. Elle peut être comprise entre 1,3V et 3V, par exemple égale à 1,8V environ, pour une densité de courant comprise, par exemple, entre 50mA/cm² et 4A/cm².

Le dispositif de séparation 20 est adapté à séparer, au sein du mélange fluidique reçu de la sortie anodique 13s du dispositif d'électrolyse 10, l'hydrogène de l'oxygène. Il comporte pour cela une deuxième cellule électrochimique 21 à membrane échangeuse de protons ainsi qu'un deuxième circuit électrique 22 permettant d'appliquer une différence de potentiel aux électrodes 24, 26 de la cellule électrochimique 21. De plus, la cellule électrochimique 21 comporte une entrée anodique 23e reliée à la sortie anodique 13s du dispositif d'électrolyse 10 pour pouvoir recevoir les fluides de sortie issus de l'anode 14, à savoir de l'eau liquide, de l'oxygène et de l'hydrogène. Le dispositif de séparation 20 forme dans cet exemple un compresseur électrochimique, dans le sens où il est adapté à fournir à sa sortie cathodique 27s de l'hydrogène sous pression.

La deuxième cellule électrochimique 21 comporte un assemblage membrane électrodes formé d'une deuxième anode 24 et d'une deuxième cathode 26 séparées l'une de l'autre par une deuxième membrane électrolytique 25 échangeuse de protons. Elle comporte en outre des plaques électriquement conductrices qui forment, l'une un deuxième circuit de distribution anodique 23, et l'autre un deuxième circuit de distribution cathodique 27.

La deuxième anode 24 comporte une couche active adaptée à réaliser l'oxydation de l'hydrogène. La couche active comporte un catalyseur favorisant cette réaction d'oxydation, par exemple du palladium ou de préférence des particules de platine supportées par du carbone. Comme indiqué précédemment, la réaction d'oxydation de l'hydrogène s'écrit :

$$H_2 \rightarrow 2H^+ + 2e^-$$

La deuxième cathode 26 comporte une couche active adaptée à réaliser la réduction des protons ayant diffusé au travers de la membrane électrolytique 25 avec les électrons issus de l'oxydation de l'hydrogène. La couche active comporte un catalyseur favorisant cette réaction de réduction, par exemple du palladium ou de préférence des particules de platine supportées par du carbone. Comme indiqué précédemment, la réaction de réduction des protons s'écrit :

$$2H^+ + 2e^- \rightarrow H_2$$

La deuxième membrane électrolytique 25 est du type échangeuse de protons. Elle permet la diffusion de protons de l'anode 24 jusqu'à la cathode 26, les protons étant des ions $H_3O^+$ au sein de la membrane 25. Elle peut être identique ou différente, en composition et/ou en épaisseur, par rapport à la membrane électrolytique 15 du dispositif d'électrolyse 10. De préférence, elle présente une épaisseur supérieure à celle de la membrane 15, permettant ainsi de limiter la quantité d'hydrogène ayant diffusé par perméation. La deuxième membrane électrolytique 25 peut être réalisée à partir de matériaux choisis habituellement par l'homme du métier, tels que ceux commercialisés sous la référence Nafion 115 ou Nafion 117 qui présente un coefficient de perméation à l'hydrogène de l'ordre de $1,25.10^4$ cm$^3$/s/cm$^2$ à 80°C et à pression atmosphérique.

Le deuxième circuit de distribution anodique 23 assure l'écoulement de fluide à partir d'un collecteur d'entrée 23e dit entrée anodique, jusqu'à un collecteur de sortie 23s dit sortie anodique. L'entrée anodique 23e est reliée à la sortie anodique 13s du dispositif d'électrolyse 10 par la ligne fluidique de transfert Lt$^a$, pour recevoir ainsi en entrée 23e l'eau liquide, l'oxygène et l'hydrogène issu du dispositif d'électrolyse 10 et fournit en sortie 23s des fluides, à savoir l'eau et l'oxygène n'ayant pas réagi. La sortie anodique 23s est reliée à une ligne d'évacuation anodique Le$^a$ reliée à une deuxième sortie S$_2$ du système électrochimique 1.

Le circuit de distribution cathodique 27 reçoit l'hydrogène généré par la réduction des protons, et assure l'écoulement de l'hydrogène produit jusqu'à un collecteur de sortie cathodique 27s. Ainsi, le collecteur d'entrée cathodique 27e ne reçoit pas de fluide en entrée et peut être obturé. Comme mentionné plus loin, en variante, il peut être ouvert et recevoir les fluides sortants issus de la sortie cathodique 17s du dispositif d'électrolyse 10. Le circuit cathodique 27 fournit en sortie 27s l'hydrogène généré par la réduction des protons.

Dans cet exemple, un circuit d'évacuation cathodique relie la sortie cathodique 17s du dispositif d'électrolyse 10 à la première sortie Si du système électrochimique 1 par une première ligne d'évacuation cathodique Le$^{c,11}$ d'une part, et relie la sortie cathodique 27s du dispositif de séparation 20 à la première sortie Si par une deuxième ligne d'évacuation cathodique Le$^{c,21}$ d'autre part.

Dans cet exemple, dans la mesure où la pression au sein de la ligne d'évacuation cathodique Le$^{c,11}$ est élevée, par exemple de l'ordre de 30 bars environ moyennant les pertes de charge, il est préférable que l'hydrogène à la sortie cathodique 27s du dispositif de séparation 20 ait une pression sensiblement égale. Pour mettre l'hydrogène sous pression, le circuit d'évacuation cathodique Le$^{c,21}$ comporte un organe 3 de régulation de pression, par exemple un déverseur qui autorise l'évacuation de l'hydrogène lorsque la pression atteint une valeur de consigne prédéfinie. La valeur de consigne est choisie de sorte que l'hydrogène sous pression en sortie 27s du dispositif de séparation 20 présente une pression sensiblement égale à la pression en sortie cathodique 17s du dispositif d'électrolyse 10.

En variante, la ligne d'évacuation cathodique Le$^{c,21}$ peut ne pas être munie d'un organe 3 de régulation de pression. Aussi, de l'hydrogène et éventuellement de l'eau liquide circulant dans la ligne d'évacuation cathodique Le$^{c,11}$ s'écoule au sein du circuit de distribution cathodique 27 du dispositif de séparation 20. Celle-ci comporte alors une pression sensiblement égale à 30 bars, moyennant les pertes de charge. L'application de la tension électrique V2 aux électrodes 24, 26 du dispositif de séparation 20 permet tout de même d'assurer la réduction des protons à la cathode 26 et donc la production d'hydrogène dans le circuit cathodique 27.

Le deuxième circuit électrique permet d'appliquer une différence de potentiel électrique continue V2 entre l'anode et la cathode, assurant ainsi l'oxydation de l'hydrogène à l'anode 24, la circulation des électrons générés à l'anode 24 dans le circuit électrique 22 jusqu'à la cathode 26, et la réduction des protons à la cathode 26. A titre d'exemple, la tension électrique appliquée V2 est de même signe et d'une valeur inférieure à la tension électrique appliquée V1 aux électrodes 14, 16 du dispositif d'électrolyse 10, par exemple dix fois inférieure, et peut être égale à 0,2V environ.

Ainsi, à la sortie anodique 23s, le mélange fluidique ne comporte sensiblement plus d'hydrogène, l'hydrogène présent à l'entrée anodique 23e ayant été oxydé à l'anode 24 par le catalyseur présent. Il ne reste ainsi plus que l'oxygène en phase gazeuse et l'eau liquide, ces espèces ne réagissant pas avec les matériaux formant la couche active de l'anode 24. La membrane électrolytique 25 peut cependant autoriser la diffusion de l'hydrogène produit à la cathode 26 au travers de la membrane 25 jusqu'à l'anode 24. Toutefois, l'hydrogène ayant diffusé par perméation est oxydé à nouveau par le catalyseur présent à l'anode 24. La quantité d'hydrogène ayant diffusé par perméation peut également être limitée du fait que la membrane 25 présente une épaisseur supérieure à celle de la membrane 15.

A la deuxième sortie S2 du système électrochimique 1 se trouvent ainsi l'eau liquide et de l'oxygène en phase gazeuse. Un séparateur de phase 2ᵃ peut être présent pour collecter l'eau liquide et laisser s'écouler l'oxygène. Dans la mesure où les fluides sortants de l'anode 14 du dispositif d'électrolyse 10 ont traversé le circuit de distribution anodique 23 du dispositif de séparation 20, ils ne contiennent sensiblement plus d'hydrogène. La fraction volumique d'hydrogène peut ainsi être très faible au sein de l'oxygène, par exemple comprise entre 1% et 2%, voire moins, ce qui permet de minimiser les risques d'ignition.

A la première sortie Si du système électrochimique 1, se trouve ainsi de l'hydrogène ici sous pression et le cas échéant de l'eau liquide. Un séparateur de phase 2ᶜ peut être présent pour collecter l'eau liquide et laisser s'écouler l'hydrogène en phase gazeuse.

Ainsi, un tel système électrochimique 1 permet de réaliser la production d'hydrogène et d'oxygène par électrolyse de l'eau, fournissant ainsi à la première sortie Si de l'hydrogène et à la deuxième sortie S2 de l'oxygène. A la deuxième sortie S2, après une séparation de phase permettant de collecter l'eau liquide, les gaz sortants contiennent de l'oxygène et éventuellement de l'hydrogène avec une fraction volumique inférieure à 4% et de préférence inférieure ou égale à 1% ou 2%. Ainsi, les risques de sécurité liés à l'ignition de l'hydrogène avec l'oxygène sont minimisés voire écartés. On obtient ainsi de l'oxygène purifié à la deuxième sortie S2, ainsi que de l'hydrogène purifié à la première sortie Si.

De plus, le système électrochimique 1 peut présenter une membrane électrolytique 15 du dispositif d'électrolyse 10 à épaisseur diminuée, permettant alors d'augmenter les performances électrochimiques du système 1. En effet, en diminuant l'épaisseur de la membrane électrolytique 15, il est possible de diminuer la différence de potentiel V1 appliquée aux électrodes 14, 16 pour une même densité de courant électrique. La proportion d'hydrogène dans l'oxygène à la sortie anodique 13s du dispositif d'électrolyse 10 reste donc inchangée, mais la puissance électrique nécessaire à la production d'hydrogène est diminuée, ce qui permet d'obtenir un meilleur rendement global du système 1, le rendement global étant ici défini comme le rapport entre le pouvoir calorifique supérieur de gaz produit sur la puissance électrique consommée. A titre d'exemple, l'épaisseur d'une membrane électrolytique 15 de type Nafion 115 ou Nafion 117, habituellement de l'ordre de 150μm à 180μm, peut être diminuée à 100μm environ, voire moins, par exemple être inférieure ou égale à 80μm, voire à 70μm, de préférence égale à 50μm environ.

En variante, pour une épaisseur diminuée de la membrane électrolytique 15, et à tension d'électrolyse V1 inchangée, la densité de courant électrique peut être largement augmentée, et ainsi la production d'hydrogène augmentée en conséquence. Cette diminution d'épaisseur se traduit par une augmentation de la quantité d'hydrogène ayant diffusé par perméation sans toutefois que la proportion d'hydrogène dans l'oxygène augmente nécessairement du fait de l'augmentation de la quantité d'oxygène produit. Il peut être noté que la proportion d'hydrogène à la sortie anodique 13s du dispositif d'électrolyse 10 peut être élevée, par exemple de l'ordre de 10% à 20%, voire plus, sans présenter pour autant des risques de sécurité du fait de la présence d'eau liquide. Le dispositif de séparation 20 est alors dimensionné, notamment en termes de surface active du dispositif de séparation 20, pour que la proportion d'hydrogène dans l'oxygène, à la sortie anodique 23s, soit sensiblement égale ou inférieure à une valeur prédéfinie. La surface active est définie comme étant la surface de la membrane électrolytique située entre et au contact d'une anode et d'une cathode.

A ce titre, un procédé de réalisation du système électrochimique 1 peut comporter une étape de calcul de la surface active du dispositif de séparation 20 de telle manière que la proportion d'hydrogène dans l'oxygène à la sortie 23s de la deuxième anode 24 présente une valeur dite de sortie inférieure ou égale à une valeur prédéfinie, compte tenu d'une valeur dite d'entrée de la proportion d'hydrogène à l'entrée 23e de la deuxième anode 24 et de la valeur de la tension électrique V2. La surface active du dispositif de séparation 20 correspond à la surface de la membrane électrolytique 25 située entre et au contact de l'anode 24 et de la cathode 26.

En effet, l'épaisseur de la membrane électrolytique 15 du dispositif d'électrolyse 10 peut être dimensionnée en fonction de la proportion acceptée d'hydrogène dans l'oxygène à la sortie anodique 13s. Plus précisément, la proportion d'hydrogène peut s'écrire comme le rapport $d_{H2}/d_{O2}$ entre un débit molaire $d_{H2}$ d'hydrogène ayant migré par perméation au travers de la membrane électrolytique 15 sur un débit molaire $d_{O2}$ d'oxygène produit à l'anode 14. Ce rapport $d_{H2}/d_{O2}$ est inversement proportionnel à l'épaisseur de la membrane électrolytique 15. En effet, le débit molaire $d_{H2}$ d'hydrogène reçu à l'anode 14 est proportionnel au rapport de la surface active $S_m$ de la membrane 15 sur l'épaisseur $e_m$ de la membrane 15, autrement dit : $d_{H2} \propto Sm/em$. De plus, le débit molaire $d_{O2}$ produit à l'anode 14 par oxydation de l'eau est proportionnel au courant électrique I du dispositif d'électrolyse 10 : $d_{O2} \propto I$. Ainsi, le rapport $d_{H2}/d_{O2}$ est proportionnel à $Sm/(em.I)$. Aussi, il est possible de déterminer l'épaisseur de la membrane 15 en fonction d'une tolérance donnée de perméation d'hydrogène au travers de la membrane 15, et donc en fonction d'une proportion prédéfinie d'hydrogène dans l'oxygène à la sortie anodique 13s.

Comme mentionné précédemment, le dimensionnement du dispositif de séparation 20, et notamment de la surface active de la membrane électrolytique 25, permet de réduire la proportion volumique $V_{H2}$ d'hydrogène dans l'oxygène, qui présente une valeur haute $V_{H2,e}$ à l'entrée anodique 23e, jusqu'à une valeur basse $V_{H2,s}$ à la sortie anodique 23s. En effet, la différence entre la valeur haute d'entrée $V_{H2,e}$ et la valeur basse de sortie $V_{H2,s}$ de la proportion d'hydrogène $V_{H2}$ dans le dispositif de séparation 20 correspond au débit molaire d'hydrogène $d_{H2,20}$ ayant été oxydé à l'anode 24, qui est proportionnel au courant électrique $I_{20}$ du dispositif de séparation : $d_{H2,20} \propto I_{20}$. Ainsi, pour une tension électrique donnée V2 et une courant électrique $I_{20}$ permettant d'obtenir le débit molaire d'hydrogène $d_{H2,20}$ voulu, la courbe de polarisation $V2=f(i2o)$ du dispositif de séparation 20 permet de déduire la valeur de la densité de courant i2o nécessaire, et donc la valeur minimale de la surface active $Sm_{25}$ de la membrane 25. La valeur basse de sortie $V_{H2,s}$ peut donc être inférieure ou égale à une valeur seuil prédéterminée.

Selon un exemple de réalisation, la première membrane électrolytique 15 et la deuxième membrane électrolytique 25 sont réalisées d'un même tenant et en un même matériau. Ainsi, la première membrane 15 et la deuxième membrane 25 forment deux zones distinctes d'une même membrane. Les deux membranes 15, 25 sont ainsi réalisées de manière monolithique, c'est-à-dire en une seule pièce, la liaison mécanique étant assurée par la continuité du matériau formant la membrane commune. Selon un autre exemple de réalisation, le système électrochimique 1 comporte des première et deuxième membranes 15, 25 physiquement distinctes l'une de l'autre. Les membranes 15, 25 ne sont ainsi pas réalisées d'un seul tenant. La première cellule électrochimique 11 et la deuxième cellule électrochimique 21 sont alors des objets distincts l'un de l'autre, reliés l'un à l'autre par la ligne fluidique de transfert $Lt^a$ et le cas échéant par la ligne de transfert $Lt^c$. D'une manière générale, les première et deuxième membranes électrolytiques 15, 25 peuvent présenter une épaisseur identique ou différente l'une de l'autre, et de préférence, l'épaisseur de la membrane 25 est supérieure à celle de la membrane 15.

Le fonctionnement du système électrochimique 1 selon le mode de réalisation illustré sur la figure 1 est maintenant décrit.

De l'eau est fournie à l'entrée principale E1 du système électrochimique 1, qui est transmise à l'entrée 13e du circuit anodique 13 du dispositif d'électrolyse 10 par la ligne d'alimentation $La^a$. La pression anodique à l'entrée 13e peut être égale à 1 bar environ. L'eau liquide injectée est en sur-stœchiométrie, par exemple d'un rapport 10, de sorte que la quantité d'eau injectée à l'entrée 13e est supérieure à la quantité d'eau consommée à l'anode 14.

De préférence, de l'eau est également introduite à l'entrée cathodique 17e du circuit cathodique 17 du dispositif d'électrolyse 10 par la ligne d'alimentation $La^c$, de manière à assurer une humidification correcte de la membrane électrolytique 15. La pression cathodique à l'entrée 17e est de l'ordre de plusieurs dizaines de bars, par exemple est égale à 30 bars environ.

Du fait de l'application d'une différence de potentiel V1 aux électrodes 14, 16 du dispositif d'électrolyse 10 et par la présence d'un catalyseur anodique adapté (ici de l'oxyde d'iridium), le dispositif d'électrolyse 10 réalise l'oxydation de l'eau à l'anode 14. L'eau est ainsi oxydée, ce qui génère de l'oxygène en phase gazeuse, des électrons, et des protons, ces derniers diffusant au travers de la membrane électrolytique 15 jusqu'à la cathode 16 sous la forme d'ions $H_3O^+$.

Le dispositif d'électrolyse 10 réalise la réduction des protons à la cathode 16, par la différence de potentiel V1 appliquée et la présence d'un catalyseur cathodique adapté (ici des particules de platine). Ainsi, les protons ayant migré au travers de la membrane 15 se recombinent avec des électrons ayant circulé dans le circuit électrique 12 pour produire de l'hydrogène.

Du fait de la perméation de la membrane électrolytique 15, et notamment par la différence de pression entre le circuit cathodique 17 et le circuit anodique 13, de l'hydrogène formé à la cathode 16 diffuse au travers de la membrane 15 et rejoint le circuit anodique 13.

Ainsi, en sortie 13s du circuit de distribution anodique 13 se trouvent de l'eau liquide, de l'oxygène issu de l'oxydation de l'eau, et de l'hydrogène ayant diffusé au travers de la membrane 15 par perméation. La proportion volumique d'hydrogène dans l'oxygène peut ici être supérieure à 4%, par exemple être égale à 10% voire à 20%, sans qu'il y ait un risque de sécurité dans la mesure où de l'eau liquide est également présente. La pression anodique de sortie peut être de l'ordre de 0,9 bar, du fait des pertes de charge au sein du circuit anodique 13.

A la sortie cathodique 17s du circuit de distribution 17 se trouvent de l'eau liquide ainsi que de l'hydrogène formé à la cathode 16. La pression cathodique de sortie peut ici être de l'ordre de 29,9 bars. La sortie cathodique 17s est reliée à la première sortie Si du système électrochimique 1 par une première ligne d'évacuation cathodique $Le^{c,11}$. Les fluides sortant du circuit anodique 13 sont transmis par la ligne fluidique de transfert $Lt^a$ jusqu'à l'entrée 23e du circuit anodique 23 du dispositif de séparation 20.

Du fait de l'application d'une différence de potentiel V2 aux électrodes 24, 26 du dispositif de séparation 20 et par la présence d'un catalyseur anodique adapté (par exemple des particules de platine ou de palladium), le dispositif de séparation 20 réalise, à l'anode 24, l'oxydation de l'hydrogène présent. L'eau liquide et l'oxygène ne sont pas oxydés/réduits par le catalyseur utilisé. Les protons diffusent au travers de la membrane électrolytique 25, de l'anode 24 jusqu'à la cathode 26, sous la forme d'ions $H_3O^+$. De préférence, la surface active du dispositif de séparation 20 est adaptée de sorte que sensiblement tout l'hydrogène présent à l'entrée 23e soit oxydé. La proportion d'hydrogène dans l'oxygène à la sortie anodique 23s est alors inférieure ou égale à une valeur prédéfinie.

Le dispositif de séparation 20 réalise la réduction des protons à la cathode 26, du fait de la différence de potentiel V2 et la présence d'un catalyseur cathodique adapté (ici platine). Ainsi, les protons ayant diffusé au travers de la membrane 25 se recombinent avec les électrons ayant circulé dans le circuit électrique 22 pour former de l'hydrogène.

Aussi, à la sortie anodique 23s, le fluide circulant ne contient sensiblement plus que de l'eau liquide et de l'oxygène, dans des proportions sensiblement égales à celles en sortie 13s du dispositif d'électrolyse 10. L'hydrogène initialement présent a été oxydé de sorte que la proportion volumique d'hydrogène dans l'oxygène à la sortie 23s est de préférence inférieure à 4%, par exemple égale à 1% à 2%, voire moins. De plus, à la sortie cathodique 27s est récupéré essentiellement de l'hydrogène, dans la mesure où il n'y a ici pas de fluide introduit à l'entrée 27e du circuit cathodique 27. L'organe de régulation de pression, ici un déverseur, s'ouvre et autorise l'évacuation de l'hydrogène lorsque la pression d'hydrogène atteint une valeur de consigne, celle-ci étant avantageusement sensiblement égale à la pression dans la première ligne d'évacuation cathodique Le[c,11].

La première sortie Si reçoit l'hydrogène et le cas échéant de l'eau liquide provenant de la sortie cathodique 27s par la ligne d'évacuation cathodique Le[c,21], et de la sortie cathodique 17s par la ligne d'évacuation cathodique Le[c,11]. Un séparateur de phase 2[c] est de préférence prévu pour collecter l'eau liquide et laisser s'écouler l'hydrogène gazeux. La deuxième sortie S2 reçoit l'oxygène et l'eau liquide issus de la sortie anodique 23s par la ligne d'évacuation anodique Le[a]. Un séparateur de phase 2[a] est de préférence prévu pour collecter l'eau liquide et laisser s'écouler l'oxygène gazeux.

Ainsi, le système électrochimique 1 assure l'électrolyse de l'eau et fournit de l'hydrogène ici sous pression au niveau de la sortie cathodique Si d'une part, et de l'oxygène avec une faible proportion volumique d'hydrogène, par exemple inférieure à 3%, au niveau de la sortie anodique S2 d'autre part. L'épaisseur de la membrane électrolytique 15 peut être diminuée pour augmenter les performances du système électrochimique 1. De plus, le dispositif de séparation 20, dans cet exemple un compresseur électrochimique, ne requiert que très peu d'énergie électrique, par exemple moins de 1% de la consommation électrique totale, de sorte qu'il impacte peu la puissance électrique globale du système électrochimique 1.

Des modes de réalisation particuliers viennent d'être décrits. Différentes variantes et modifications apparaîtront à l'homme du métier.

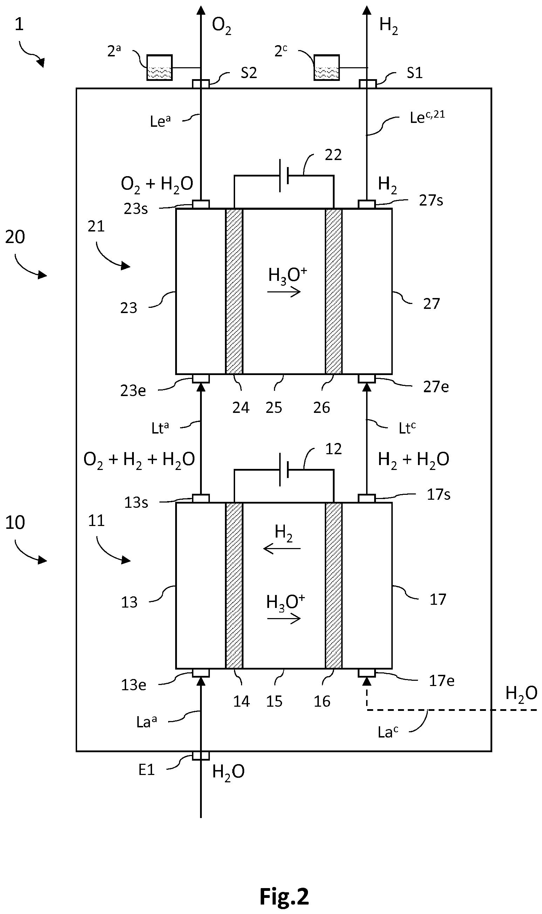

Ainsi, la figure 2 illustre une variante du système électrochimique 1 décrit en référence à la figure 1. Cette variante se distingue du mode de réalisation précédent essentiellement en ce que la sortie cathodique 17s du dispositif d'électrolyse 10 est reliée à l'entrée cathodique 27e du dispositif de séparation 20 par une ligne fluidique de transfert Lt[c]. De plus, le circuit d'évacuation ne comporte plus la ligne d'évacuation cathodique Le[c,11] mais seulement de la ligne d'évacuation Le[c,21] qui relie la sortie cathodique 27s à la première sortie Si. En fonctionnement, les fluides sortants du circuit cathodique 17, à savoir l'hydrogène produit à la cathode 16 et l'eau liquide introduite à l'entrée 17e, sont transmis par la ligne de transfert Lt[c] jusqu'à l'entrée cathodique 27e du dispositif de séparation 20. Bien que la pression cathodique soit élevée, de l'ordre de 30 bars aux pertes de charge près, l'application de la tension V2 aux électrodes 24, 26 du dispositif de séparation 20 permet d'oxyder l'hydrogène à l'anode 24 et de produire de l'hydrogène à la cathode 26.

**Revendications**

1. Système électrochimique (1) d'électrolyse de l'eau, comportant :

   • une entrée dite principale (E1) pour recevoir de l'eau à électrolyser, une première sortie (S1) pour fournir de l'hydrogène produit et une deuxième sortie (S2) pour fournir de l'oxygène produit ;
   • un dispositif d'électrolyse (10) comportant un assemblage membrane électrodes formé d'une première anode (14) et d'une première cathode (16) séparées l'une de l'autre par une première membrane (15) échangeuse de protons, la première anode (14) étant adaptée à effectuer l'oxydation de l'eau et la première cathode (16) étant adaptée à effectuer la réduction des protons,

      o la première anode (14) étant fluidiquement associée à une entrée (13e) reliée à l'entrée principale (E1) et à une sortie (13s) ;

   **caractérisé en ce qu'**il comporte :

      • un dispositif de séparation (20) comportant un assemblage membrane électrodes formé d'une deuxième anode (24) et d'une deuxième cathode (26) séparées l'une de l'autre par une deuxième membrane (25) échangeuse de protons, la deuxième anode (24) étant adaptée à effectuer l'oxydation de l'hydrogène et la deuxième cathode (26) étant adaptée à effectuer la réduction des protons,

  o la deuxième cathode (26) étant fluidiquement associée à une sortie (27s) reliée à la première sortie (S1) du système électrochimique (1) ;
  o la deuxième anode (24) étant fluidiquement associée à une entrée (23e) reliée à la sortie (13s) de la première anode (14), et à une sortie (23s) reliée à la deuxième sortie (S2) du système électrochimique (1).

2. Système électrochimique (1) selon la revendication 1, dans lequel le dispositif de séparation (20) comporte un circuit électrique (22) adapté à appliquer une différence de potentiel entre la deuxième anode (24) et la deuxième cathode (26).

3. Système électrochimique (1) selon l'une quelconque des revendications 1 à 2, comportant un séparateur de phase à la deuxième sortie (S2).

4. Système électrochimique (1) selon l'une quelconque des revendications 1 à 3, comportant une ligne fluidique de transfert anodique reliant la sortie (13s) de la première anode (14) à l'entrée (23e) de la deuxième anode (24) sans comporter de séparateur de phase.

5. Système électrochimique (1) selon l'une quelconque des revendications 1 à 4, dans lequel la première anode (14) comporte un catalyseur favorisant l'oxydation de l'eau, le catalyseur étant choisi parmi l'iridium et le ruthénium.

6. Système électrochimique (1) selon l'une quelconque des revendications 1 à 5, dans lequel la deuxième anode (24) comporte un catalyseur favorisant l'oxydation de l'hydrogène, le catalyseur étant choisi parmi le platine et le palladium.

7. Système électrochimique (1) selon l'une quelconque des revendications 1 à 6, dans lequel la première cathode (16) et la deuxième cathode (26) comportent chacune un catalyseur favorisant la réduction des protons, le catalyseur étant choisi parmi le platine et le palladium.

8. Système électrochimique (1) selon l'une quelconque des revendications 1 à 7, comportant une entrée dite secondaire (17e) adaptée à recevoir de l'eau, l'entrée secondaire étant reliée à une entrée de la première cathode (16).

9. Système électrochimique (1) selon l'une quelconque des revendications 1 à 8, comportant une ligne fluidique d'évacuation (Le$^{c,21}$) reliant la sortie (27s) de la deuxième cathode (26) à la première sortie (S1) du système électrochimique (1), la ligne d'évacuation (Le$^{c,21}$) comportant un organe (3) de régulation de la pression autorisant l'écoulement fluidique lorsqu'une pression du fluide présent dans la ligne d'évacuation (Le$^{c,21}$) est égale à une valeur de consigne.

10. Système électrochimique (1) selon l'une quelconque des revendications 1 à 9, la première membrane (15) et la deuxième membrane (25) étant distinctes l'une de l'autre.

11. Système électrochimique (1) selon l'une quelconque des revendications 1 à 10, la deuxième membrane (25) présente une épaisseur supérieure à celle de la première membrane (15).

12. Procédé d'électrolyse de l'eau, comportant une introduction d'eau en surstœchiométrie à l'entrée principale (E1) du système électrochimique (1) selon l'une quelconque des revendications précédentes.

13. Procédé selon la revendication 12, comportant une introduction d'eau à une entrée dite secondaire (17e) reliée à une entrée de la première cathode (16).

14. Procédé selon la revendication 13, l'eau introduite à l'entrée secondaire (17e) présentant une pression supérieure à une pression de l'eau introduite à l'entrée principale (E1).

15. Procédé de réalisation d'un système électrochimique selon l'une quelconque des revendications 1 à 11, comportant une étape de calcul d'une surface active de la deuxième membrane (25) du dispositif de séparation (20) de telle manière qu'une proportion d'hydrogène dans l'oxygène à la sortie (23s) de la deuxième anode (24) présente une valeur de sortie ($V_{H2,s}$) inférieure ou égale à une valeur prédéfinie, compte tenu d'une valeur d'entrée ($V_{H2,e}$) de la proportion d'hydrogène à l'entrée (23e) de la deuxième anode (24) et d'une valeur de tension électrique (V2) appliquée entre la deuxième anode (24) et la deuxième cathode (26).

**Patentansprüche**

1. Elektrochemisches System (1) zur Elektrolyse von Wasser, umfassend:

  • einen sogenannten Haupteinlass (E1) zum Aufnehmen von zu elektrolysierendem Wasser, einen ersten Auslass (S1) zum Abgeben von erzeugtem Wasserstoff und einen zweiten Auslass (S2) zum Abgeben von erzeugtem Sauerstoff;

• eine Elektrolysevorrichtung (10), umfassend eine Membran-Elektroden-Anordnung, die aus einer ersten Anode (14) und aus einer ersten Kathode (16) gebildet wird, die voneinander durch eine erste Protonenaustauschmembran (15) getrennt sind, wobei die erste Anode (14) geeignet ist, die Oxidation des Wassers durchzuführen, und die erste Kathode (16) geeignet ist, die Reduktion der Protonen durchzuführen,

 o wobei die erste Anode (14) fluidisch einem Einlass (13e) zugeordnet ist, der mit dem Haupteinlass (E1) und mit einem Auslass (13s) verbunden ist;

**dadurch gekennzeichnet, dass** es umfasst:

• eine Trennvorrichtung (20), die eine Membran-Elektroden-Anordnung umfasst, die aus einer zweiten Anode (24) und aus einer zweiten Kathode (26) gebildet wird, die voneinander durch eine zweite Protonenaustauschmembran (25) getrennt sind, wobei die zweite Anode (24) geeignet ist, die Oxidation des Wasserstoffs durchzuführen, und die zweite Kathode (26) geeignet ist, die Reduktion der Protonen durchzuführen,

 o wobei die zweite Kathode (26) fluidisch einem Auslass (27s) zugeordnet ist, der mit dem ersten Auslass (S1) des elektrochemischen Systems (1) verbunden ist;
 o wobei die zweite Anode (24) fluidisch einem Einlass (23e) zugeordnet ist, der mit dem Auslass (13s) der ersten Anode (14) verbunden ist, und einem Auslass (23s), der mit dem zweiten Auslass (S2) des elektrochemischen Systems (1) verbunden ist.

2. Elektrochemisches System (1) nach Anspruch 1, bei dem die Trennvorrichtung (20) eine elektrische Schaltung (22) umfasst, die geeignet ist, eine Potentialdifferenz zwischen der zweiten Anode (24) und der zweiten Kathode (26) anzulegen.

3. Elektrochemisches System (1) nach einem der Ansprüche 1 bis 2, umfassend einen Phasentrenner am zweiten Auslass (S2).

4. Elektrochemisches System (1) nach einem der Ansprüche 1 bis 3, umfassend eine Anodentransferfluidleitung, die den Auslass (13s) der ersten Anode (14) mit dem Einlass (23e) der zweiten Anode (24) verbindet, ohne einen Phasentrenner zu umfassen.

5. Elektrochemisches System (1) nach einem der Ansprüche 1 bis 4, bei dem die ersten Anode (14) einen Katalysator umfasst, der die Oxidation des Wassers begünstigt, wobei der Katalysator unter Iridium und Ruthenium gewählt ist.

6. Elektrochemisches System (1) nach einem der Ansprüche 1 bis 5, bei dem die zweite Anode (24) einen Katalysator umfasst, der die Oxidation des Wasserstoffs begünstigt, wobei der Katalysator unter Platin und Palladium gewählt ist.

7. Elektrochemisches System (1) nach einem der Ansprüche 1 bis 6, bei dem die ersten Kathode (16) und die zweite Kathode (26) jeweils einen Katalysator umfassen, der die Reduktion der Protonen begünstigt, wobei der Katalysator unter Platin und Palladium gewählt ist.

8. Elektrochemisches System (1) nach einem der Ansprüche 1 bis 7, umfassend einen sogenannten sekundären Einlass (17e), der zum Aufnehmen von Wasser geeignet ist, wobei der sekundäre Einlass mit einem Einlass der ersten Kathode (16) verbunden ist.

9. Elektrochemisches System (1) nach einem der Ansprüche 1 bis 8, umfassend eine Abführungsfluidleitung (Le$^{c,21}$), die den Auslass (27s) der zweiten Kathode (26) mit dem ersten Auslass (S1) des elektrochemischen Systems (1) verbindet, wobei die Abführungsleitung (Le$^{c,21}$) ein Element (3) zur Regelung des Drucks umfasst, das die Fluidströmung zulässt, wenn ein Druck des in der Abführungsleitung vorhandenen Fluids (Le$^{c,21}$) gleich einem Sollwert ist.

10. Elektrochemisches System (1) nach einem der Ansprüche 1 bis 9, wobei die erste Membran (15) und die zweite Membran (25) voneinander verschieden sind.

11. Elektrochemisches System (1) nach einem der Ansprüche 1 bis 10, wobei die zweite Membran (25) eine Dicke aufweist, die größer als die der ersten Membran (15) ist.

12. Verfahren zur Elektrolyse von Wasser, umfassend ein überstöchiometrisches Einleiten von Wasser am Haupteinlass (E1) des elektrochemischen Systems (1) nach einem der vorhergehenden Ansprüche.

13. Verfahren nach Anspruch 12, umfassend ein Einleiten von Wasser an einem sogenannten sekundären Einlass (17e), der mit einem Einlass der ersten Kathode (16) verbunden ist.

14. Verfahren nach Anspruch 13, wobei das am sekundären Einlass (17e) eingeleitete Wasser einen Druck aufweist, der höher als ein Druck des am Haupteinlass (E1) eingeleiteten Wassers ist.

15. Verfahren zum Ausführen eines elektrochemischen Systems nach einem der Ansprüche 1 bis 11, umfassend einen Schritt des Berechnens einer aktiven Fläche der zweiten Membran (25) der Trennvorrichtung (20) derart, dass ein Wasserstoffanteil in dem Sauerstoff am Auslass (23s) der zweiten Anode (24) einen Auslasswert ($V_{H2,s}$) kleiner oder gleich einem vorgegebenen Wert aufweist, unter Berücksichtigung eines Einlasswerts ($V_{H2,e}$) des Wasserstoffanteils am Einlass (23e) der zweiten Anode (24) und eines Werts der elektrischen Spannung (V2), die zwischen der zweiten Anode (24) und der zweiten Kathode (26) anliegt.

## Claims

1. Electrochemical system (1) for the electrolysis of water, comprising:

   • a main inlet (E1) for receiving water to be electrolyzed, a first outlet (S1) for providing hydrogen produced and a second outlet (S2) for providing oxygen produced;
   • an electrolysis device (10) comprising a membrane-electrode assembly formed of a first anode (14) and of a first cathode (16) separated from one another by a first proton-exchange membrane (15), the first anode (14) being suitable for carrying out the oxidation of the water and the first cathode (16) being suitable for carrying out the reduction of the protons,

      o the first anode (14) being in fluidic connection with an inlet (13e) connected to the main inlet (E1) and with an outlet (13s);

   • **characterized in that** it comprises:

      • a separation device (20) comprising a membrane-electrode assembly formed of a second anode (24) and of a second cathode (26) separated from one another by a second proton-exchange membrane (25), the second anode (24) being suitable for carrying out the oxidation of the hydrogen and the second cathode (26) being suitable for carrying out the reduction of the protons,

         o the second cathode (26) being in fluidic connection with an outlet (27s) connected to the first outlet (S1) of the electrochemical system (1);
         o the second anode (24) being in fluidic connection with an inlet (23e) connected to the outlet (13s) of the first anode (14) and with an outlet (23s) connected to the second outlet (S2) of the electrochemical system (1).

2. Electrochemical system (1) according to Claim 1, in which the separation device (20) comprises an electrical circuit (22) suitable for applying a difference in potential between the second anode (24) and the second cathode (26).

3. Electrochemical system (1) according to either one of Claims 1 and 2, comprising a phase separator at the second outlet (S2).

4. Electrochemical system (1) according to any one of Claims 1 to 3, comprising a fluid line for anode transfer connecting the outlet (13s) of the first anode (14) to the inlet (23e) of the second anode (24) without comprising a phase separator.

5. Electrochemical system (1) according to any one of Claims 1 to 4, in which the first anode (14) comprises a catalyst promoting the oxidation of water, the catalyst being chosen from iridium and ruthenium.

6. Electrochemical system (1) according to any one of Claims 1 to 5, in which the second anode (24) comprises a catalyst promoting the oxidation of hydrogen, the catalyst being chosen from platinum and palladium.

7. Electrochemical system (1) according to any one of Claims 1 to 6, in which the first cathode (16) and the second cathode (26) each comprise a catalyst promoting the reduction of protons, the catalyst being chosen from platinum and palladium.

8. Electrochemical system (1) according to any one of Claims 1 to 7, comprising a "secondary" inlet (17e) suitable for receiving water, the secondary inlet being connected to an inlet of the first cathode (16).

9. Electrochemical system (1) according to any one of Claims 1 to 8, comprising a fluid discharge line ($Le^{c,21}$) connecting the outlet (27s) of the second cathode (26) to the first outlet (S1) of the electrochemical system (1), the discharge line ($Le^{c,21}$) comprising a means (3) for regulation of the pressure allowing fluid flow when a pressure of the fluid present in the discharge line ($Le^{c,21}$) is equal to a set value.

10. Electrochemical system (1) according to any one of Claims 1 to 9, the first membrane (15) and the second membrane (25) being distinct from each other.

**11.** Electrochemical system (1) according to any one of Claims 1 to 10, the second membrane (25) exhibiting a greater thickness than that of the first membrane (15).

**12.** Method for the electrolysis of water, comprising introduction of water in excess stoichiometry at the main inlet (E1) of the electrochemical system (1) according to any one of the preceding claims.

**13.** Method according to Claim 12, comprising introduction of water at a "secondary" inlet (17e) connected to an inlet of the first cathode (16).

**14.** Method according to Claim 13, the water introduced at the secondary inlet (17e) exhibiting a greater pressure than a pressure of the water introduced at the main inlet (E1).

**15.** Method for the production of an electrochemical system according to any one of Claims 1 to 11, comprising a stage of calculation of an active surface area of the second membrane (25) of the separation device (20) in such a way that a proportion of hydrogen in the oxygen at the outlet (23s) of the second anode (24) exhibits an outlet value ($V_{H2,s}$) of less than or equal to a predefined value, taking into account an inlet value ($V_{H2,e}$) of the proportion of hydrogen at the inlet (23e) of the second anode (24) and a value of electric voltage (V2) applied between the second anode (24) and the second cathode (26).

**Fig.1**

**Fig.2**

**EP 3 428 318 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004040862 A
- US 2003196893 A
- US 20160024666 A